# EUROPEAN PATENT APPLICATION

(11) **EP 0 718 361 A1**
(43) Date of publication of application: **26.06.1996**
(21) Application number: 95309332.5
(22) Date of filing: 21.12.1995
(51) Int. Cl.: C08L 23/02, C08J 3/22

(54) **Antiblocking agent master batch and oriented polyolefin resin film using the same**

(30) Priority: 21.12.1994 JP 318183/94; 23.08.1995 JP 214445/95
(71) Applicant: SUMITOMO CHEMICAL COMPANY, LIMITED, Osaka (JP)
(72) Inventor: Ebara, Takeshi, Ichihara-shi (JP); Tanimura, Hiroyuki, Sodegaura-shi (JP); Sadatoshi, Hajime, Ichihara-shi (JP); Yamazaki, Kazuhiro, Niihama-shi (JP); Yamada, Taiji, Niihama-shi (JP); Hashimoto, Tuyoshi, Niihama-shi (JP)
(74) Representative: Cresswell, Thomas Anthony

(57) **Abstract**

An antiblocking agent master batch which comprises 100 parts by weight of a polyolefin resin and 1 - 50 parts by weight of crosslinked polymer beads may be mixed with a polyolefin resin to give a composition in which the content of crosslinked polymer beads is 0.05 or more but less than 1 part by weight per 100 parts by weight of the total polyolefin resin. This composition may be oriented in at least a uniaxial direction to give an oriented film having good transparency.

## Description

The present invention relates to an antiblocking agent master batch for oriented polyolefin resin film which is suitable for efficient production of high transparency oriented polyolefin resin film excellent in slip property and blocking resistance and to oriented polyolefin resin film using the master batch.

High transparency oriented polyolefin resin film, particularly, high transparency oriented polypropylene film, has been used in a wide variety of fields, including food packaging, fiber packaging, etc. by virtue of its excellent transparency and mechanical properties. However, oriented polypropylene film, which has such excellent properties, is not free from shortcomings. In particular, when the sheets of the film are placed one upon another, they are apt to undergo the phenomenon of so-called blocking, that is, they tend to stick to one another; this greatly impairs the operability in packaging.

In order to improve the slip property and blocking resistance of polypropylene resin oriented film, there have been proposed methods which comprise kneading fine powders of inorganic substances as an antiblocking agent (hereinafter abbreviated as ABA) into polypropylene resin, forming the kneaded product into a sheet and then orienting the sheet. Such methods include the addition of zeolite, magnesium silicate, or the like to improve the blocking resistance (for example, JP-B-52-16134 and JP-B-48-14423) and the addition of silica fine powder to improve the blocking resistance (for example, JP-B-63-58170 and JP-A-4-288353).

Further, methods have been proposed wherein high molecular substances are used as ABA, which are added to polypropylene resin in a necessary amount and made to disperse as fine powder in the resin, to obtain oriented film (for example, JP-A-57-64522, JP-A-5-214120 and JP-A-6-107868).

In the actual production of oriented film, generally, the amount to be added of ABA mentioned above must be varied from grade to grade of film according to the kinds of polyolefin resin, the thickness and layer structure of film, difference in orienting conditions, and other factors. In the production processes of the present art, ABA is added to polyolefin resin beforehand in an amount necessary for the ultimate product film and the resulting mixture is formed into a sheet and then oriented. Such production processes often require a large number of starting resin silos to correspond to respective grades of oriented film to be produced or require starting resin silos of large volume because ABA is treated at a low concentration in the process. Thus, the processes are apt to be very poor in production efficiency.

In view of such situations, the present inventors have made extensive study to find a process for producing a high transparency oriented polyolefin resin film with good efficiency and without determination of transparency, slip property and blocking resistance inherent to the film. As the result, the inventors have found that an oriented polyolefin resin film which meets the above-mentioned object can be obtained by using as an ABA master batch a polyolefin resin composition containing crosslinked polymer beads in a high concentration, and thus attained the present invention.

The object of the present invention is to provide an antiblocking agent master batch for oriented polyolefin film which is suitable for efficient production of oriented polyolefin resin film containing ABA and excellent in transparency and also oriented polyolefin resin film using the master batch.

The present invention relates to an antiblocking agent master batch for oriented polyolefin resin film oriented at least in uniaxial direction and excellent in transparency, said master batch comprising 100 parts by weight of a polyolefin resin and 1 - 50 parts by weight (PHR) of crosslinked polymer beads,
an oriented polyolefin resin film excellent in transparency which is obtained by orienting at least in uniaxial direction a film prepared from a composition obtained by mixing with a polyolefin resin an antiblocking agent master batch comprising 100 parts by weight of a polyolefin resin and 1 - 50 parts by weight (PHR) of crosslinked polymer beads, so as to give a content of the crosslinked polymer beads in the film of 0.05 or more but less than 1 part by weight per 100 parts by weight of the total polyolefin resin,
a process for producing oriented polyolefin resin film excellent in transparency which comprises the steps of:
   (a) mixing 1 - 50 parts by weight (PHR) of crosslinked polymer beads with 100 parts by weight of a polyolefin resin to form an antiblocking agent master batch for oriented polyolefin resin film,
   (b) mixing the master batch with a polyolefin resin so as to give a content of the crosslinked polymer beads in a film of 0.05 or more but less than 1 part by weight per 100 parts by weight of the total polyolefin resin, to obtain a precursor composition, and
   (c) orienting the precursor composition at least in uniaxial direction to form a film,
a process for imparting well-balanced slip property blocking resistance, and transparency to an oriented film, and
use of an antiblocking agent master batch for producing an oriented polyolefin resin film having well-balanced slip property, blocking resistance, and transparency.

The present invention is described in detail below.

The polyolefin resins referred to in the present invention may be, for example, homopolymers or copolymers of propylene, ethylene, butene-1, hexene-1, 4-methylpentene-1, etc. or mixtures of these polymers, among which preferably used are polypropylene resins. Polypropylene resins referred to in the present invention are known polymers comprising propylene as the main monomer unit and may be, for example, propylene homopolymers and copolymers of propylene with other α-olefins, for example, propylene-ethylene copolymers, propylene-ethylene block copolymers, propylene-butene-1 copolymers and propylene-ethylene-butene-1 terpolymers, and mixtures of these polymers. If necessary and desired, the polypropylene resin may be incorporated with other polyolefin resins, e.g., polyethylene, polybutene, styrenic resins, ethylene-propylene rubber and ethylene-propylene-diene terpolymer rubbers. Particularly preferably used among these are polypropylene resins which contain crystalline propylene homopolymers or crystalline propylene copolymers containing 2% by weight or less of ethylene, butene-1, hexene-1 or 4-methylpentene-1.

The crosslinked polymer beads used in the present invention may be obtained, for example, by conventional emulsion polymerization, dispersion polymerization, suspension polymerization, soap-free polymerization, seed polymerization, etc. Examples of monomer species which can be used for the polymerization of crosslinked polymer beads include acrylic monomers, styrenic monomers and other monomers. Specific examples of the acrylic monomers are acrylic acid and acrylic acid ester derivatives, such as methyl acrylate, ethyl acrylate and butyl acrylate; and methacrylic acid and methacrylic acid ester derivatives, such as methyl methacrylate, ethyl methacrylate and butyl methacrylate. Specific examples of styrenic monomers are styrene and styrene derivatives, such as methylstyrene, ethylstyrene, butylstyrene and propylstyrene. Examples of other monomers are polymerizable vinyl monomers, such as vinyl acetate, vinyl chloride, vinylidene chloride, acrylonitrle and methacrylonitrile.

Preferably used among these monomers are acrylic monomers and styrenic monomers. These monomers may be used each alone or in a combination of two or more thereof.

The crosslinking agent used in the polymerization of the crosslinked polymers beads of the present invention may be any desired radical-polymerizable monomer having at least two vinyl groups. Specific examples thereof include divinylbenzene, ethylene glycol diacrylate, ethylene glycol dimethacrylate, trimethylolpropane triacrylate, trimethylolpropane trimethacrylate, pentaerythritol tetracrylate and pentaerythritol tetramethacrylate. These crosslinking agents may be used each alone or in an combination of two or more thereof.

The crosslinked polymer beads used in the present invention are not particularly restricted in other points so long as the polymer beads have been crosslinked with a sufficient amount of crosslinking agent to maintain its bead form in the steps of kneading, sheet forming and orienting during the production of polyolefin resin film. The amount of the crosslinking agent may be for example, 1 - 50% by weight, preferably 2 - 30% by weight, more preferably 3 - 20% by weight based on the total amount of the monomer and the crosslinking agent. The crosslinked polymer beads added in the present invention are an organic substance like polyolefin resins and have a good affinity to the polyolefin resin, so that they show a good dispersability in the resin. Accordingly, even when the polymer beads are used as a high concentration master batch in producing polyolefin resin film, they do not give rise to film breakage due to poor dispersion of ABA, which is apt to occur when oriented film is produced by using an ABA master batch obtained by addition of fine particles of inorganic substances. Further, the deterioration of see-through clarity of film due to void development caused by poor dispersion of ABA is quite little.

In the ABA master batch of the present invention, the amount of the crosslinked polymer beads compounded therein is 1 - 50 parts by weight (PHR), preferably 2 - 35 parts by weight, more preferably 2 - 25 parts by weight per 100 parts by weight of polyolefin resin. When the amount of the crosslinked polymer beads is too small, the effect of improving production efficiency which is the object of the present invention cannot be attained, whereas when the amount is too large, the dispersion of crosslinked polymer beads is poor.

The crosslinked polymer beads used in the present invention are not particularly restricted as to their size, but generally they have a weight average particle diameter of 0.5 - 5 µm, preferably 0.8 - 3 µm. When the weight average particle diameter is too small, the polymer beads cannot form on the oriented film surface protuberances having sufficient height to impart good blocking resistance to the film. When the weight average particle diameter is too large, on the other hand, a severe stress concentration is apt to develop at the interface between the crosslinked polymer beads and polyolefin resin during film orienting, to cause peeling at the interface and resultant development of voids, or the crosslinked polymer beads themselves cause light scattering; these can result in deterioration of see-through clarity of the film.

In the present invention, by compounding the above-mentioned antiblocking agent master batch so as to give a content of the crosslinked polymer beads in the film of 0.05 or more but less than 1% by weight, preferably 0.07 or more but less than 0.6% by weight, more preferably 0.08 or more but less than 0.5% by weight, a polyolefin resin oriented film having excellently balanced transparency and blocking resistance can be produced without deterioration of film appearance.

The method used for preparing the antiblocking agent master batch of the present invention is not particularly limited so long as it ensures uniform dispersion of the crosslinked polymer beads. A suitable method, for example, comprises mixing the antiblocking agent and the polyolefin resin in a ribbon blender, Henschel mixer, or the like and melt-kneading the mixture in an extruder. At this time, if necessary, known additives as antioxidants, neutralizing agents, lubricants, antifogging agent, antistatic agents, etc. may be added as desired.

In diluting the antiblocking agent master batch of the present invention with polyolefin resin to obtain a desired concentration of the antiblocking agent in the oriented polyolefin resin film, the method used for adding the antiblocking agent master batch to the polyolefin resin is not particularly limited so long as it can ensure uniform dispersion of the crosslinked polymer beads. A suitable method, for example, comprises mixing the antiblocking agent master batch and the polyolefin resin in a ribbon blender, Henschel mixer, or the like and melt-kneading the mixture in an extruder. At this time, if necessary and desired, known additives as antioxidants, neutralizing agents, lubricants, antifogging agents, antistatic agents, etc. may be added.

The polyolefin resin composition of the present invention thus obtained may be melt-extruded in a conventional manner, then cooled and oriented at least in uniaxial direction by a conventional method, to give film.

Though the thickness of the film of the present invention is not particularly restricted, it is usually 200 µm or less, preferably 5 - 100 µm, more preferably 8 - 50 µm. Thus, oriented polyolefin resin film excellent in transparency which has, for example, a total light transmittance of about 80% or more is obtained.

The present invention is described in more detail below with reference to Examples and Comparative Examples, but the invention is in no way restricted by the Examples.

### EXAMPLES

The measured values of the respective items shown in the detailed description and the examples of the present invention were determined by the following methods.
(1) Weight average particle diameter (unit: µm) : This was determined with a particle size analyzer by light diffraction scattering method (Microtrack FRA, mfd by Leeds & Northrup Ltd.).
(2) Haze (unit: %) The haze was determined according to ASTM D1003.
(3) Scattering transmitted light intensity (LSL) (unit: %): This was determined with a LSI tester (mfd. by Toyo Seiki K.K., receiving scattering transmitted light in the range of ± 0.4° - 1.2°). Since the LSI value corresponds fairly well to the see-through impression obtained by visual observation, the value was used as the measure for see-through impression.
(4) Total light transmittance (unit: %): This was determined according to ASTM D-1003.
(5) Slip property: The static friction coefficient (µs) and the kinetic friction coefficient (µk) of the film were determined according to ASTM D-1894.
(6) Blocking resistance (unit: kg/20 cm²) : Two film sheets each 80 mm by 120 mm in dimension were placed one upon the other so that they overlap by 100 mm in the lengthwise direction and their corona-treated surfaces face to each other. The sheets were put between glass plates and conditioned under a load of 2 kg at 50°C for 48 hours. Thereafter, they were allowed to stand in an atmosphere of 23°C and 50% humidity for at least 30 minutes. Then a test piece 20 mm in width was cut out in the lengthwise direction from the film sheets, and subjected to a shearing tensile test at a rate of 200 mm/min. A total of 10 times of tests were made with 10 test pieces prepared from the same film. From the results of these tests were eliminated one maximum value and 4 successive values beginning with the minimum value. The average of the remaining 5 values was calculated and taken as the strength necessary for peeling apart the sample.

### Example 1

### (a) Preparation of crosslinked polymer beads

In a glass flask equipped with a stirrer were placed 100 parts by weight of ethanol, 1 part by weight of hydroxypropyl cellulose, 15 parts by weight of styrene, 5 parts by weight of methyl methacrylate, 1.5 parts by weight of 55% by weight divinylbenzene and 0.5 part by weight of benzoyl peroxide, and were made into a solution. The solution mixture was polymerized at 79°C for 9 hours, then concentrated and dried to obtain crosslinked polymer beads. The crosslinked polymer beads thus obtained had a weight average particle diameter of 1.1 µm.

### (b) Preparation of oriented film

With 100 parts by weight of propylene homopolymer powder having a melt index of 2.3 g/10 min were mixed 1.0 part by weight (PHR) of stearic ester of stearyldiethanolamine as an antistatic agent, 5 PHR of the solid of the crosslinked polymer beads obtained in above (a), and 0.1 PHR of calcium stearate, 0.2 PHR of BHT (2.6-di-t-butylhydroxytoluene) and 0.05 PHR of Irganox 1010 (an antioxidant, mfd. by Ciba-Geigy LTD.), respectively as stabilizers, in a Henschel mixer, and the mixture was granulated into pellets through a 40 mmφ extruder to obtain a master batch of the crosslinked polymer beads. Separately, 100 parts by weight of propylene polymer powder having a melt index of 2.3 g/10 min. was mixed with 2.0 PHR of stearic ester of stearyldiethanolamine as an antistatic agent, and 0.1 PHR of calcium stearate, 0.2 PHR of BHT and 0.05 PHR of Irganox 1010, respectively as stabilizers, in a Henschel mixer, and the mixture was granulated into pellets through a 65 mmφ extender to obtain a master batch of the antistatic agent.

Then, to 46 parts by weight of polypropylene pellets (Sumitomo Noblen, mfd. by Sumitomo Chemical Co., Ltd., grade: FS 2011D) were added 46 parts by weight of the antistatic agent master batch obtained above and further 8 parts by weight of the crosslinked polymer bead master batch obtained above, and were mixed in a pellet blender. The resulting blend was melt-extruded at a resin temperature of 260°C, and then cooled by quenching with a cooling roll of 60°C to solidify into a sheet 0.8 mm in thickness. Then the sheet was preheated, oriented longitudinally 5-fold at an orientation temperature of 145°C by means of the peripheral speed difference of rolls of the longitudinal stretching machine, subsequently oriented transversally 8-fold at an orientation temperature of 157°C with a tenter-type stretching machine and heat-treated at 165°C, to obtain an oriented film 20 mm in thickness. The film was then corona-treated on one side.

The oriented film obtained was evaluated for its properties and the results are shown in Table 1.

### Example 2

### (a) Preparation of oriented film

The procedures of preparation of oriented film of Example 1(b) were repeated except that in the preparation of the master batch of crosslinked polymer beads, the compounding amount of the crosslinked polymer beads was increased to 15 PHR and that 48.67 parts by weight of polypropylene pellets (Sumitomo Noblen, grade: FS 2011D) was mixed with 48.67 parts by weight of the antistatic agent master batch and further 2.66 parts by weight of the above-mentioned master batch of crosslinked polymer beads in the pellet blender. The oriented film thus obtained was evaluated for its properties and the results are shown in Table 1.

### Comparative Example 1

With 100 parts by weight of propylene polymer powder having a melt index of 2.3 g/10 min. were mixed 0.4 PHR of the crosslinked polymer beads prepared in Example 1(a), 1.0 PHR of stearic ester of stearyldiethanolamine as an antistatic agent, and 0.1 PHR of calcium stearate, 0.2 PHR of BHT and 0.05 PHR of Irganox 1010, respectively as stabilizers, in a Henschel mixer, and the mixture was granulated into pellets through a 40 mmφ extruder.

The pellets were then melt-extended at a resin temperature of 260°C, and then cooled by quenching with a cooling roll of 60°C to solidify into a sheet 0.8 mm in thickness. Then the sheet was preheated, oriented longitudinally 5-fold at an orientation temperature of 145°C by means of the peripheral speed difference of rolls of the longitudinal stretching machine, subsequently oriented transversely 8-fold at an orientation temperature of 157°C with a tenter-type stretching machine and heat-treated at 165°C, to obtain oriented film 20 µm in thickness. The film was then corona-treated on one side.

The film was evaluated for its properties and the results are shown in Table 1.

Since ABA is added directly in this example, when the ABA concentration in the film needs to be changed the necessary pellets must be prepared separately. This is disadvantageous in production efficiency.

### Example 3

### (a) Preparation of crosslinked polymer beads

The procedures of the preparation of crosslinked polymer beads of Example 1(a) were repeated except for using 18.3 parts by weight of styrene in place of 15 parts by weight of styrene of Example 1(a) and 1.7 parts by weight of methyl methacrylate in place of 5 parts by weight of methyl methacrylate of Example 1(a). The crosslinked polymer beads thus obtained had a weight average particle diameter of 1.1 µm.

### (b) Preparation of oriented film

A master batch of crosslinked polymer beads was prepared in the same manner as in Example 1(b) except for using the master batch obtained above (a). Then oriented film was prepared in the same manner as in Example 1(b) except for using the master batch obtained above. The oriented film thus obtained was evaluated for its properties, and the results are shown in Table 1.

### Comparative Example 2

### (a) Preparation of oriented film

Oriented film was prepared in the same manner as in Comparative Example 1 except that the crosslinked polymer beads added to 100 parts by weight of the propylene polymer powder having a melt index of 2.3 g/ 10 min. was replaced by 0.4 PHR of the crosslinked polymer beads prepared in Example 3(a). The film was evaluated for its properties and the results are shown in Table 1.

Since ABA is added directly in this example, when the ABA concentration in the film needs to be changed the necessary pellets must be prepared separately. This is disadvantageous in production efficiency.

### Example 4

### (a) Preparation of crosslinked polymer beads

The procedures of the preparation of crosslinked polymer beads of Example 1(a) were repeated except that 20 parts by weight of styrene was used in place of 15 parts by weight of styrene of Example 1(a) and that methyl methacrylate was not used. The crosslinked polymer beads thus obtained had a weight average particle diameter of 1.2 µm.

### (b) Preparation of oriented film

A master batch of crosslinked polymer beads was prepared in the same manner as in Example 1(b) except for using the crosslinked polymer beads obtained in above (a) as the crosslinked polymer beads. Then oriented film was prepared in the same manner as in Example 1(b) except that the crosslinked polymer bead master batch used was replaced by 6 parts by weight of the master batch of crosslinked polymer beads prepared above and that the amounts of FS 2011D and the antistatic agent master batch were altered to 47 parts by weight, respectively. The oriented film thus obtained was evaluated for its properties and the results are shown in Table 1.

### Comparative Example 3

### (a) Preparation of oriented film

Oriented film was prepared in the same manner as in Comparative Example 1 except that the crosslinked polymer beads mixed with 100 parts by weight of the propylene polymer powder having a melt index of 2.3 g/10 min. were replaced by 0.3 PHR of the crosslinked polymer beads prepared in Example 4(a).

The film obtained was evaluated for its properties and the results are shown in Table 1.

Since ABA is directly added in this example, when the ABA concentration in the film needs to be changed the necessary pellets must be prepared separately. This is disadvantageous in production efficiency.

### Example 5

### (a) Preparation of oriented film

A master batch of crosslinked polymer beads was prepared in the same manner as in Example 1(b) except for using as the crosslinked polymer beads Epostar MA 1002 (a crosslinked methyl methacrylate polymer, mfd. by NIPPON SHOKUBAI CO., LTD., weight average particle diameter: 2.3 µm). Then oriented film was prepared in the same manner as in Example 1(b) except that the crosslinked polymer bead master batch used was replaced by 6 parts by weight of the crosslinked polymer bead master batch prepared above and that the amounts of FS 2011D and the antiblocking agent master batch were altered to 47 parts by weight, respectively. The oriented film thus obtained was evaluated for its properties and the results are shown in Table 1.

### Comparative Example 4

### (a) Preparation of oriented film

Oriented film was prepared in the same manner as in Comparative Example 1 except that the crosslinked polymer beads mixed with 100 parts by weight of the propylene polymer powder having a melt index of 2.3 g/10 min. was replaced by 0.3 PHR of the crosslinked polymer beads used in Example 5(a).

The film was evaluated for its properties and the results are shown in Table 1.

Since ABA is directly added in this example, when the ABA concentration in the film needs to be changed the necessary pellets must be prepared separately. This is disadvantages in production efficiency.

### Comparative Example 5

### (a) Preparation of oriented film

A master batch of ABA (silica gel) was prepared in the same manner as in Example 1(b) except for using Sylysia 350 (fine powder silica gel, mfd. by Fuji Silysia Chemical Ltd., weight average particle diameter: 1.8 µm) as ABA in place of crosslinked polymer beads. Then preparation of oriented film was tried in the same manner as in Example 1(b) except that the ABA master batch used was replaced by 4 parts by weight of the ABA (silica gel) master batch prepared above and that the amounts of FS 2011D and the antistatic agent master batch were altered to 48 parts by weight, respectively. In this case, poor dispersion of silica gel occurred and caused film splitting to develop from the poor dispersion parts at the time of orienting, so that oriented film could not be obtained. The results of the test are shown in Table 1.

### Comparative Example 6

### (a) Preparation of oriented film

Oriented film was prepared in the same manner as in Comparative Example 1 except that 0.2 PHR of Sylysia 350 used in Comparative Example 5(a), in place of crosslinked polymer beads, was mixed with 100 parts by weight of the propylene polymer powder having a melt index of 2.3 g/10 min.

The film obtained was evaluated for its properties and the results are shown in Table 1. Though the transparency of the film in good, its blocking resistance is poor.

### Comparative Example 7

### (a) Preparation of oriented film

Preparation of oriented film was tried in the same manner as in Example 1(b) except that the crosslinked polymer bead master batch was replaced by 8 parts by weight of Sylysia 350 master batch obtained in Example 5(a). The amounts of FS 2011D and the antiblocking agent master batch were 46 parts by weight, respectively. In this example, poor dispersion of silica gel occurred and caused film splitting to develop from the poor dispersion parts at the time of orienting, so that oriented film could not be obtained. The results of the test are shown in Table 1.

### Comparative Example 8

### (a) Preparation of oriented film

Oriented film was prepared in the same manner as in Comparative Example 1 except that the crosslinked polymer beads mixed with 100 parts by weight of the propylene polymer powder having a melt index of 2.3 g/10 min. was replaced by 0.4 PHR of Sylysia 350 used in Comparative Example 5(a).

The film obtained was evaluated for its properties and the results are shown in Table 1. Though the blocking resistance of the film is good, its transparency is poor.

### Comparative Example 9

### (a) Preparation of oriented film

A master batch of ABA (silica gel) was prepared in the same manner as in Example 1(b) except that Sylophobic 505 (a fine powder silica gel, mfd. by Fuji Silysia Chemical Ltd., weight average particle diameter: 2.6 µm) was used as ABA in place of the crosslinked polymer beads. Then oriented film was prepared in the same manner as in Example 1(b) except that 6 parts by weight of the master batch obtained above was used and that the amounts of FS 2011D and the antistatic agent master batch were altered to 47 parts by weight, respectively.

The film obtained was evaluated for its properties and the results are shown in Table 1. The use of high concentration master batch of silica gel results in poor dispersion of silica gel and the transparency of the film is very poor.

### Comparative Example 10

### (a) Preparation of oriented film

Oriented film was prepared in the same manner as in Comparative Example 1 except that 0.3 PHR of Sylophobic 505 used in Comparative Example 9(a), in place of the crosslinked polymer beads, was mixed with 100 parts by weight of the propylene polymer powder having a melt index of 2.3 g/10 min.

The film obtained was evaluated for its properties and the results are shown in Table 1. Since ABA is directly added in the example, when the ABA concentration in the film needs to be changed the necessary pellets must be prepared separately. This is disadvantageous in production efficiency.

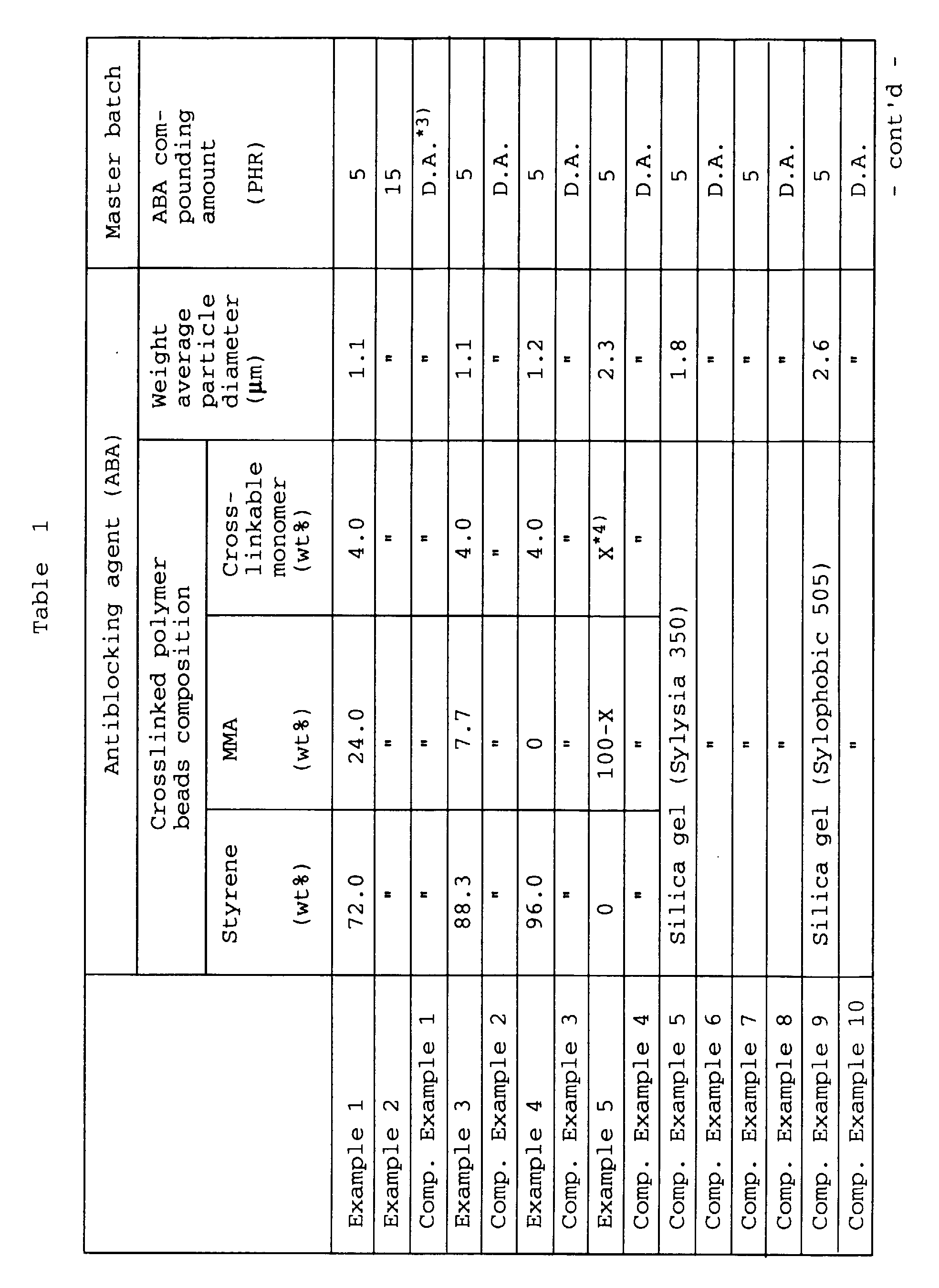

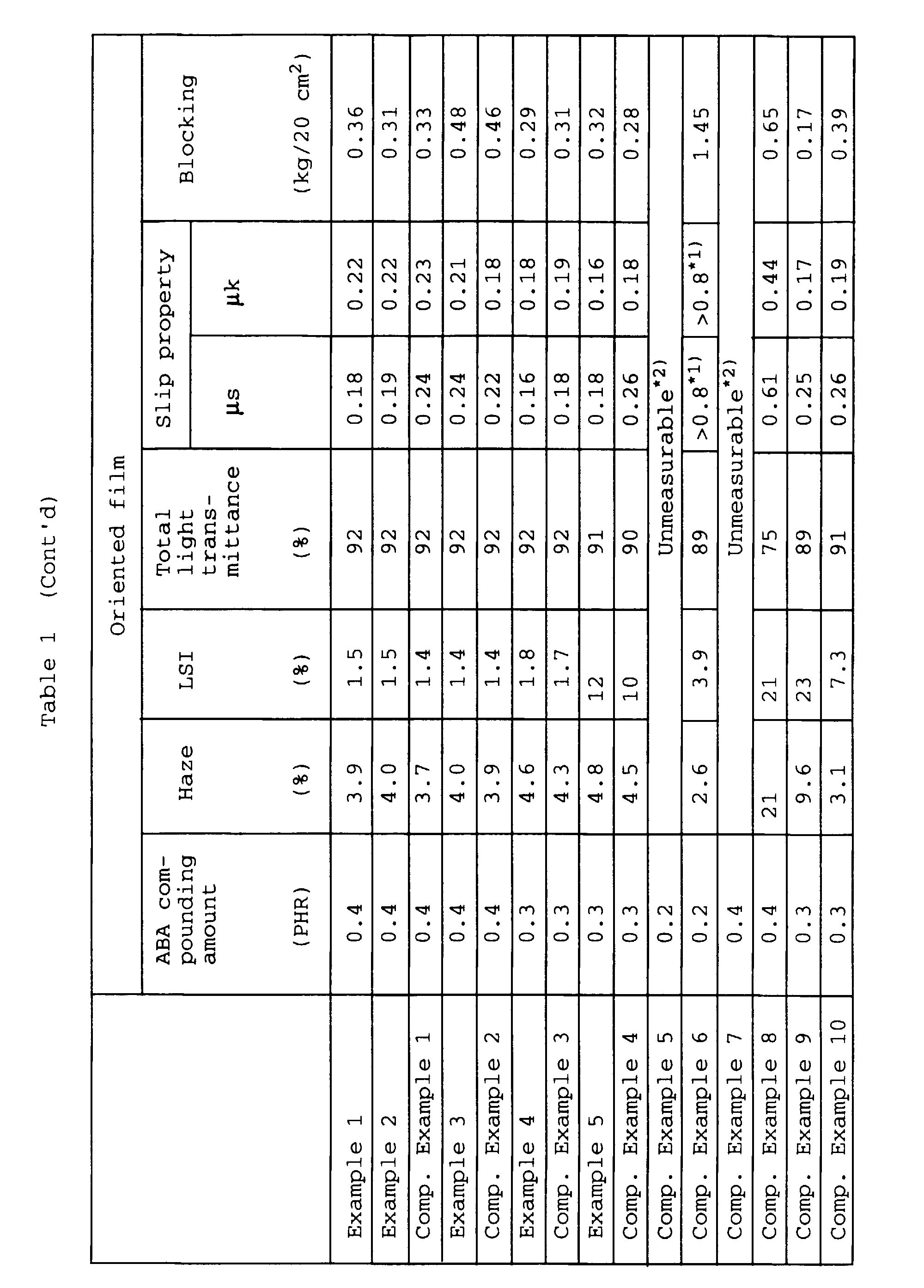

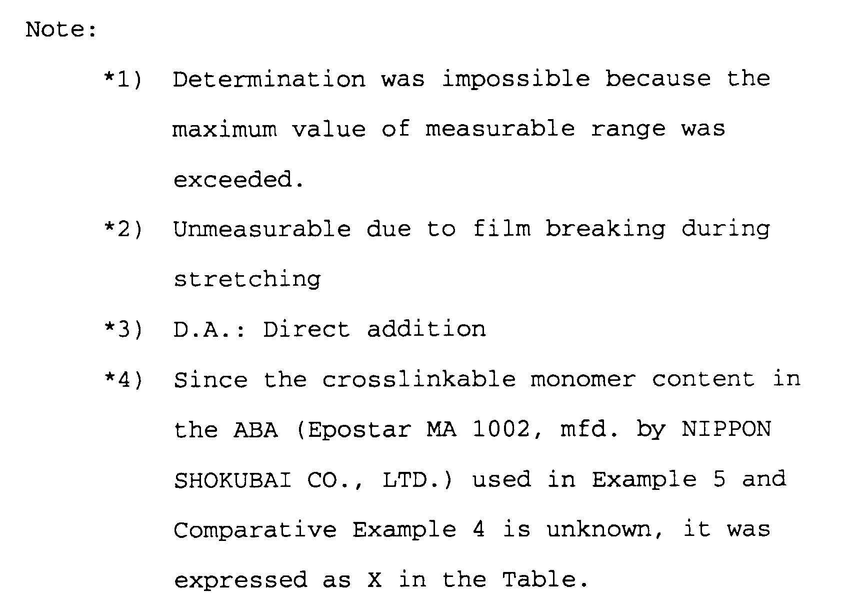

By using the antiblocking agent master batch for high transparency oriented polyolefin resin film provided by the present invention, oriented polyolefin resin film can be produced with good efficiency and without deterioration of transparency, slip property and blocking resistance inherent to the film.

The film provided by the present invention can be used in a wide variety of fields including food packaging, fiber packaging, etc. by virtue of its excellent transparency.

## Claims

1. An antiblocking agent master batch suitable for an oriented polyolefin resin film, which master batch comprises 100 parts by weight of a polyolefin resin and 1 - 50 parts by weight (PHR) of crosslinked polymer beads.

2. A polyolefin resin composition which is obtainable by mixing a polyolefin resin with an antiblocking agent master batch as claimed in claim 1 such that the content of crosslinked polymer beads in the composition is 0.05 or more but less than 1 part by weight per 100 parts by weight of the total polyolefin resin.

3. A composition according to claim 2 wherein the polyolefin resin is polypropylene resin.

4. An oriented polyolefin resin film which is obtainable by orienting, in at least a uniaxial direction, a composition as claimed in claim 2 or 3.

5. A film according to claim 4 which has a thickness of 5-100 µm.

6. A process for producing an oriented polyolefin resin film, which process comprises:
(a) mixing 1 - 50 parts by weight (PHR) of crosslinked polymer beads with 100 parts by weight of a polyolefin resin to form an antiblocking agent master batch,
(b) mixing the said master batch with a polyolefin resin to obtain a precursor composition in which the content of crosslinked polymer beads is 0.05 or more but less than 1 part by weight per 100 parts by weight of the total polyolefin resin, and
(c) orienting the said precursor composition in at least a uniaxial direction to form a film.

7. Use of an antiblocking agent master batch as claimed in claim 1 in the production of an oriented polyolefin resin film.

8. A packaging material suitable for foods or for fibre which comprises an oriented film as claimed in claim 4 or 5 or an oriented film obtainable by a process as claimed in claim 6.
